# EUROPÄISCHE PATENTANMELDUNG

(11) **EP 4 645 284 A1**
(43) Veröffentlichungstag der Anmeldung: **05.11.2025**
(21) Anmeldenummer: 25170904.4
(22) Anmeldetag: 16.04.2025
(51) Int. Cl.: G08G 5/22, G08G 5/59, G08G 5/72, G06N 3/08, G06F 18/20

(54) **VERFAHREN ZUR DETEKTION VON DROHNEN, VERFAHREN ZUM TRAINIEREN EINES KI-MODELLS, COMPUTERPROGRAMM UND ERFASSUNGSGERÄT ZUR DURCHFÜHRUNG DES DETEKTIONSVERFAHRENS**

(30) Priorität: 19.04.2024 DE 102024003183
(71) Anmelder: Bundesdruckerei GmbH, 10969 Berlin (DE)
(72) Erfinder: Bösch, Christoph, 14558 Nuthetal (DE); Tietke, Markus, 12439 Berlin (DE); Waldmüller-Lidke, Jens, 12683 Berlin (DE)
(74) Vertreter: Hentrich Patent- & Rechtsanwaltspartnerschaft mbB

(57) **Zusammenfassung**

Die Erfindung betrifft ein Verfahren zur Detektion einer Drohne (100) auf KI-Basis, umfassend die Schritte:
- Erfassen einer Vielzahl von drahtlos übermittelten Funksignalen (200) über die Luft mithilfe mindestens einer Erfassungs-Antenne eines Erfassungsgeräts;
- Analysieren der Funksignale (200) mithilfe eines auf Drohnensignale (300, 302, 304) hinsichtlich der zeitlichen Abfolge oder zeitlichen Länge von Signalen, mithin nicht-bildbasiert, trainierten KI-Modells (400); und
- Feststellen des Vorhandenseins mindestens einer Drohne (100) innerhalb der Reichweite des Erfassungsgeräts, wenn das trainierte KI-Modell (400) eine Übereinstimmung detektiert oder wenn das trainierte KI-Modell (400) zumindest eine Übereinstimmung bis zu einem vorgegebenen Schwellenwert detektiert.
Die Erfindung betrifft auch ein Verfahren zum Trainieren des KI-Modells (400), ein Computerprogramm und ein Erfassungsgerät zur Durchführung des Detektionsverfahrens.

## Beschreibung

Die vorliegende Erfindung betrifft ein Verfahren zur Detektion von Drohnen, ein Verfahren zum Trainieren eines KI-Modells, ein Computerprogramm und ein Erfassungsgerät zur Durchführung des Detektionsverfahrens.

Die vorliegende Erfindung befasst sich mit dem sicherheitskritischen Problem der Erkennung und der Abwehr von Drohnen, mithin von sogenannten unbemannten Luftfahrzeugen. Die Zahl der Drohnenhersteller ist in jüngerer Zeit stark angewachsen und deshalb auch die Anzahl kommerziell erwerblicher Drohnenmodelle, welche für vergleichsweise geringe Kosten von "jedermann" erworben werden können. Als größte Drohnenherstellerin ist die Da-Jiang Innovations (DJI) bekannt, die den wohl größten Marktanteil solcher kommerziell genutzter Drohnen einnimmt.

Diese Drohnen lassen sich zu Freizeitzwecken nutzen, beispielsweise um Luftaufnahmen von schönen Orten oder Landschaften aufzuzeichnen. Für Drohnen existieren spezielle "Flugverbotszonen für unbemannte Luftfahrzeuge". Sie sind in Deutschland durch die - zum Zeitpunkt der vorliegenden Anmeldung geltende - Luftverkehrs-Ordnung (LuftVO) in Verbindung mit der EU-Verordnung 2019/947 über die "Vorschriften und Verfahren für den Betrieb unbemannter Luftfahrzeuge" geregelt. Immer wieder dringen leider solche kommerziell genutzten Drohnen in die Flugverbotszonen ein, beispielsweise in den gesperrten Luftraum militärischer Einrichtungen. Zunehmend wird auch ein gehäuftes Eindringen der Drohnen in (staats-) hoheitliche Luftsperrgebiete, also in gesperrten Luftraum wegen militärischer Operationen, aus Sicherheitsgründen oder aufgrund politischer Anlässe, verzeichnet. Insbesondere im Falle von militärischen Operationen oder in Kriegen werden vermehrt die - eigentlich für den zivilen Einsatz vorgesehenen - Drohnen als Kriegshelfer eingesetzt, da die Drohnen üblicherweise mit hochauflösenden Kamerasystemen ausgerüstet sind und sich daher sehr gut zum Ausspähen gegnerischer Stellungen und Einrichtungen eignen. Doch auch Luftsperrgebiete an und um Flughäfen oder um Stadien bei Großveranstaltungen werden zunehmend weniger von den Drohnenpiloten beachtet, also von denjenigen Personen an einer Fernsteuerung der Drohne. Von Drohnen geht dabei eine erhöhte Gefahr aus, weil diese häufig ausreichend leistungsstark sind, um Stoffe oder Beladungen aufzunehmen und zu transportieren, die explodieren oder gezielt gezündet und zur Explosion gebracht werden können.

Bei den übertragenen Signalen von kommerziellen Drohnen besteht das Problem, dass die Übertragung verschlüsselt ist, so dass bei einer Vielzahl verschiedener - auch drohnenunspezifischer - Signale nicht zuverlässig auf das Vorhandensein einer oder mehrerer Drohnen geschlossen werden kann. Aufgrund der vorherrschenden Verschlüsselung kann also im Rahmen von bekannten Verfahren nur mithilfe eines Radars eine Erkennung erfolgen - was ungenau ist - so dass oft nicht hinreichend zuverlässig bewertet werden kann, ob eine Drohne vorliegt; und falls doch, so ist nicht erkennbar, von welchem Hersteller sie stammt, um geeignete Abwehrmechanismen in Kraft zu setzen.

Es ist daher die Aufgabe der Erfindung, ein Verfahren anzugeben, mit welchem eine Detektion von Drohnen zuverlässig erfolgt; insbesondere damit anschließend eine entsprechende Drohnenabwehr erfolgen kann. Außerdem ist es Aufgabe der Erfindung, ein entsprechendes Verfahren zum Trainieren eines KI-Modells, ein entsprechendes Computerprogramm und ein entsprechendes Erfassungsgerät anzugeben.

Diese Aufgabe wird gelöst durch ein Verfahren zur Detektion einer Drohne mit den Merkmalen des Anspruchs 1, durch ein Verfahren zum Trainieren eines KI-Modells mit den Merkmalen des Anspruchs 8, durch ein Computerprogramm mit den Merkmalen des Anspruchs 9 und durch ein Erfassungsgerät mit den Merkmalen des Anspruchs 10. Vorteilhafte Ausgestaltungen mit zweckmäßigen Weiterbildungen sind in den abhängigen Ansprüchen angegeben.

Die hierin offenbarten Ausführungsbeispiele werden unter Einsatz von KI ("künstlicher Intelligenz") realisiert. Dabei wird ein Maschinenlern-Modell oder Maschinenlern-Algorithmen genutzt, welche insbesondere eine Datenklassifizierung vornehmen. Das maschinelle Lernen kann sich dabei auf Algorithmen und statistische Modelle beziehen, die von einem Computersystem genutzt werden können, um eine bestimmte Aufgabe ohne Verwendung expliziter Anweisungen auszuführen, anstatt sich auf Modelle und Inferenz zu verlassen. Beim maschinellen Lernen kann beispielsweise eine Transformation von Daten verwendet werden, die aus einer Analyse von Verlaufsdaten und/oder Trainingsdaten hergeleitet werden können; in diesem Falle liegt dann also keine auf reinen Regeln basierende Transformation der Daten mehr vor.

Vorliegend kann in einer ersten Variante der Inhalt von Bildern für die Drohnensignale unter Verwendung eines Maschinenlern-Modells (KI-Modell) oder unter Verwendung eines Maschinenlern-Algorithmus analysiert werden. Damit das Maschinenlern-Modell den Inhalt eines Bildes analysieren kann, ist das Maschinenlern-Modell in der ersten Variante unter Verwendung von Trainingsbildern als Eingabe und Trainingsinhaltsinformationen als Ausgabe trainiert worden. Durch die Verwendung einer großen Menge an Trainingsbildern und/oder Trainingssequenzen sowie zugehörigen Trainingsinhaltsinformationen "lernt" das Maschinenlern-Modell, den Inhalt erfasster Bilder auch zu erkennen, welche in den Trainingsdaten selbst (noch) nicht enthalten sind.

Vorliegend kann in einer zweiten nicht-bildbasierten Variante die zeitliche Abfolge unter Verwendung eines Maschinenlern-Modells oder unter Verwendung eines Maschinenlern-Algorithmus analysiert werden; mit anderen Worten erfolgt dabei dann eine Analyse der Drohnensignale im Zeitbereich. Somit kann also das im vorangehenden Abschnitt erläuterte Prinzip auch für solche Sensordaten verwendet werden, denen kein eigentliches Bild zugrunde liegt. Auch hier wird also ein Maschinenlern-Modell (KI-Modell) unter Verwendung von Trainingssensordaten und einer erwünschten Ausgabe "angelernt", so dass von dem Maschinenlern-Modell in den Trainingssensordaten selbst (noch) nicht enthaltene Sensordaten ebenfalls erkannt werden.

Maschinenlern-Modelle (KI-Modelle) können also unter Verwendung von Trainingsdaten trainiert werden. Hierzu kann das eingesetzte Maschinenlern-Modell beispielsweise eine Support-Vector-Machine (SVM) sein. Eine SVM ist ein mathematischer Algorithmus, der eingesetzt wird, um Objekte zu klassifizieren. Insbesondere in der Text- oder Bildklassifizierung bieten SVMs Vorteile gegenüber neuronalen Netzwerken, da sie schneller trainierbar sind und bereits mit wenigen Trainingsdaten gute Ergebnisse liefern. SVMs können durch Bereitstellen einer Eingabe mit einer Mehrzahl von Trainingseingabewerten trainiert werden, die zu einer von zwei Klassen gehören. Die SVM kann trainiert werden, um einer der beiden Klassen einen neuen Eingabewert zuzuweisen. Zur Klassifizierung nutzt die SVM dann eine sogenannte Hyperplane, wobei diese so gewählt ist, dass der Abstand vom nächsten Element jeder Gruppe zur Hyperplane maximal ist. Dies maximiert die Trennung der Klassen. Das eingesetzte Maschinenlern-Modell (KI-Modell) kann beispielsweise alternativ oder zusätzlich einem Random-Forrest-Modell beruhen, welches sich ebenfalls durch eine gute Möglichkeit der Datenklassifizierung auszeichnet. Ein Random-Forest-Modell besteht aus mehreren unkorrelierten Entscheidungsbäumen. Jeder Baum wird auf einer zufälligen Teilmenge der Trainingsdaten trainiert. Die Vorhersage des Random-Forest-Modells basiert auf der Mehrheitsentscheidung der einzelnen Bäume. Durch die Kombination mehrerer Bäume werden genauere Ergebnisse erzielt, insbesondere wenn die Bäume nicht miteinander korreliert sind. Das eingesetzte Maschinenlern-Modell (KI-Modell) kann beispielsweise alternativ oder zusätzlich auf einem Gradient-Boosting-Modell beruhen, welches sich ebenfalls durch eine gute Möglichkeit der Datenklassifizierung auszeichnet. Beim "Boosting" werden mehrere Modelle schrittweise zu einem Ensemble kombiniert. Gradient Boosting ist eine Untergruppe von Boosting-Algorithmen. Hierbei wird das nächste Modell so gebaut, dass es die Verlustfunktion des Ensembles weiter minimiert. Die Verlustfunktion misst die Differenz zwischen der Vorhersage des Modells und dem tatsächlichen Wert. "Gradient Boosting" ist flexibel und kann mit verschiedenen Verlustfunktionen und Modellen individualisiert werden.

Das erfindungsgemäße Verfahren zur Detektion einer Drohne auf KI-Basis umfasst insbesondere die folgenden Schritte:
- Erfassen einer Vielzahl von drahtlos übermittelten Funksignalen über die Luft mithilfe mindestens einer Erfassungs-Antenne eines Erfassungsgeräts;
- Analysieren der Funksignale mithilfe eines auf Drohnensignale (300, 302, 304) hinsichtlich der zeitlichen Abfolge und/oder hinsichtlich der zeitlichen Länge von Signalen (Signaldauer), mithin nicht-bildbasiert, trainierten KI-Modells; und
- Feststellen des Vorhandenseins mindestens einer Drohne innerhalb der Reichweite des Erfassungsgeräts, wenn das trainierte KI-Modell eine Übereinstimmung detektiert oder wenn das trainierte KI-Modell zumindest eine Übereinstimmung bis zu einem vorgegebenen Schwellenwert detektiert.

Auf diese Weise ist ein Verfahren zur Erkennung einer oder mehrerer Drohnen geschaffen, wobei die Erkennung der Drohnen auch ohne die Entschlüsselung der erfassten Signale erfolgt. Auf ein Decodieren der erfassten verschlüsselten Signale kommt es nicht an.

In einem Ausführungsbeispiel des Verfahrens ist das KI-Modell eingerichtet, ein Drohnensignal in Form eines DroneID-Signals durch einen Vergleich mit mindestens einem schon vorab im Zeitbereich erfassten Referenzmuster für dieses Signal zu erkennen und/oder zu klassifizieren, um daraus auf das Vorhandensein mindestens einer Drohne innerhalb der Reichweite des Erfassungsgeräts zu schließen. Dieses Signal hat ein sehr charakteristisches Muster im Zeitbereich und lässt sich daher zuverlässig detektieren und klassifizieren mithilfe des KI-Modells.

In einem weiteren Ausführungsbeispiel ist das KI-Modell alternativ oder ergänzend eingerichtet, ein Drohnensignal in Form eines Videosignals durch einen Vergleich mit mindestens einem schon vorab im Zeitbereich erfassten Referenzmuster für dieses Signal zu erkennen und/oder zu klassifizieren, um daraus auf das Vorhandensein mindestens einer Drohne innerhalb der Reichweite des Erfassungsgeräts zu schließen. Die Ergänzung des KI-Modells auf das drohnenspezifische, mithin für Drohnen charakteristische, Videosignal erhöht die Zuverlässigkeit des Ergebnisses bei der KI-basierten Analyse.

In einem weiteren Ausführungsbeispiel ist das KI-Modell alternativ oder ergänzend eingerichtet, ein Drohnensignal in Form eines Fernsteuerungssignals durch einen Vergleich mit mindestens einem schon vorab im Zeitbereich erfassten Referenzmuster für dieses Signal zu erkennen und/oder zu klassifizieren, um daraus auf das Vorhandensein mindestens einer Drohne innerhalb der Reichweite des Erfassungsgeräts zu schließen. Die Ergänzung des KI-Modells auf die drohnenspezifische, mithin für Drohnen charakteristische, Steuerungssignale erhöht die Zuverlässigkeit des Ergebnisses bei der KI-basierten Analyse.

Um die Mustererkennung im Zeitbereich und/oder um das Training des KI-Modells zu beschleunigen, ist es von Vorteil, wenn das KI-Modell einen Filter (FFI / FFT) nutzt, um die Funksignale als Muster im Zeitbereich - nicht im Frequenzbereich - mit Referenzmustern zu vergleichen.

Eine zuverlässige Zuordnung oder Klassifizierung lässt sich dadurch erzielen, dass das KI-Modell auf einer Support-Vector-Machine (SVM) basiert, die eingerichtet ist, eine Klassifizierung der Signale im Zeitbereich zumindest hinsichtlich der Bandbreite und/oder hinsichtlich der Signaldauer und/oder hinsichtlich des Frequenzbandes vorzunehmen.

Da es sehr zeit- und rechenintensiv wäre, die übertragenen Signale zu decodieren bzw. zu entschlüsseln, ist es mit der KI-Musteranalyse möglich und sinnvoll, wenn das Feststellen des Vorhandenseins mindestens einer Drohne innerhalb der Reichweite des Erfassungsgeräts mit dem trainierten KI-Modell dekodierungsfrei erfolgt.

Das erfindungsgemäße Verfahren zum Trainieren eines KI-Modells für die Drohnenerkennung, wie sie vorstehend in Ausführungsbeispielen erläutert wurde, umfasst insbesondere die folgenden Schritte:
- Erfassen von über die Luft drahtlos übermittelten Funksignale von einer Drohne oder zwischen der Drohne und einer ihr zugehörigen Fernsteuerung über die Luft mithilfe mindestens einer Erfassungs-Antenne eines Erfassungsgeräts;
- Definieren der Drohnensignale als Referenzmuster in einem drohnenspezifischen Referenzmerkmalssatz hinsichtlich ihrer zeitlichen Abfolge oder hinsichtlich ihrer zeitlichen Länge, mithin also im Zeitbereich;
- Speichern des drohnenspezifischen Referenzmerkmalssatzes in eine Datenbank; und
- Erfassen weiterer Funksignale und Trainieren des KI-Modells unter Verwendung der weiteren Daten.

Die in Verbindung mit dem erfindungsgemäßen computerimplementierten Verfahren erläuterten Vorteile, technischen Wirkungen und weiterführenden Ausgestaltungen gelten in gleicher Weise für das erfindungsgemäße Computerprogramm, welches mit Programmcode zur Durchführung aller Verfahrensschritte der vorstehend erwähnten Verfahren ausgestattet ist, wenn das Computerprogramm in einem Computer ausgeführt wird.

Ausführungsbeispiele gemäß der Erfindung umfassen also, insbesondere zusätzlich, einen Datenträger mit elektrisch auslesbaren Steuersignalen, die in der Lage sind, mit einem programmierbaren Computersystem derart zusammenzuwirken, dass eines der hierin beschriebenen Verfahren durchgeführt wird.

Im Rahmen der vorliegenden Erfindung kann das Computerprogramm auf einem Computerprogrammprodukt, maschinenlesbar, gespeichert vorliegen; es ist beispielsweise auf einem Träger (RAM, ROM, CD, Geräte etc.) gespeichert. Es kann aber auch im Speicher eines entfernt gelegenen Servers hinterlegt und auf dessen Prozessor ausgeführt sein, sodass ein Client/Server-System oder auch ein Cloud Computing System vorliegt. Ein Computerprogramm ist ein physikalisches, vertriebsfähiges Software-Produkt, das das Programm umfasst.

Somit gibt es Ausführungsbeispiele der Erfindung in Form eines Datenstroms oder in Form einer Signalfolge, die das Computerprogramm zur Durchführung eines der hierin beschriebenen Verfahren darstellt. Der Datenstrom oder die Signalfolge können derart konfiguriert sein, dass sie über eine entfernt gelegene Datenkommunikationsverbindung, insbesondere über das Internet oder das Intranet, übertragen werden.

Die in Verbindung mit den erfindungsgemäßen Verfahren erläuterten Vorteilen, Ausgestaltungen und Wirkungen gelten in gleicher Weise für das erfindungsgemäße Erfassungsgerät, das einen Computer umfasst, welcher dazu eingerichtet ist, eines der vorstehend genannten Verfahren zu bewirken. In anderen Worten umfasst das oder ist das Erkennungsgerät ein/en Computer, auf dem das Computerprogramm zum Ausführen eines der hierin beschriebenen Verfahrens installiert ist.

Die vorstehend in der Beschreibung genannten Merkmale und Merkmalskombinationen sowie die nachfolgend in der Figurenbeschreibung genannten und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch spätere Merkmalskombination aus den Erläuterungsausführungen vorgehen und erzeugbar sind.

Weitere Merkmale und Vorteile der Erfindung ergeben sich aus der nachfolgenden Beschreibung sowie aus den beigefügten Zeichnungen auf die Bezug genommen wird. Die Zeichnungen zeigen:
- Figur 1: eine schematische Darstellung einer kommerziell erwerbbaren Drohne und ihrer Fernsteuerung (Fernbedienung), bei der die einzelnen Konstituenten und ihre gegenseitige Wechselwirkung illustriert sind,
- Figur 2: ein exemplarisch erfasstes Funksignal einer beispielsweise aus Figur 1 ersichtlichen Drohne,
- Figur 3: das Frequenzspektrum des Funksignals aus Figur 2,
- Figur 4: eine schematische Illustration der einzelnen Drohnensignale, die sich aus dem Frequenzspektrum nach Figur 3 ergeben,
- Figur 5: eine schematische Illustration der Erkennung und Klassifizierung von zwei der in Figur 4 illustrierten Drohnensignale unter Einsatz einer Support-Vector-Machine (SVM), und
- Figur 6: ein schematischer Ablaufplan des erfindungsgemäßen Verfahrens zur Erkennung von Drohnen unter Nutzung des KI-Modells, wie es in Figur 5 illustriert ist.

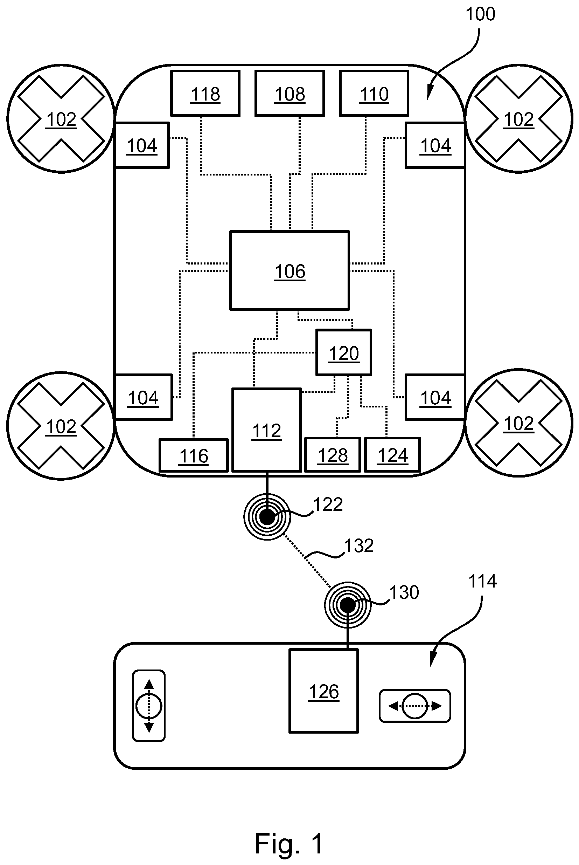

Die Figur 1 illustriert die einzelnen Hardware-Komponenten, aus denen eine kommerzielle Drohne 100 typischerweise besteht. Es ist auch illustriert, wie die einzelnen Komponenten miteinander interagieren. Die Drohne 100 umfasst eine Mehrzahl, üblicherweise vier oder acht, elektromotorisch angetriebene Rotoren 102, deren Drehzahl von elektronischen Drehzahlreglern 104 (ESC für "electronic speed controller") geregelt wird.

Die elektronischen Drehzahlregler 104 erhalten ihre Befehle von einem Flugcontroller 106 (FC für "flight controller"), der das Flugverhalten der Drohne 100 überwacht und steuert. Der Flugcontroller 106 ist durch einen Prozessor gebildet, der beispielsweise als anwendungsspezifische integrierte Schaltung (ASIC für "application-specific integrated circuit"), als feldprogrammierbare Gatteranordnung (FPGA für "field-programmable gate array"), als Mikroprozessor, als Mikroprozessor mit komplexem Befehlsatz (CISC für "complex instruction set computer") oder als Mikroprozessor mit reduziertem Befehlssatz (RISC für "reduced instruction set computer") gebildet ist. Hierzu ist in einem nicht-flüchtigen Speicher des Flugcontrollers 106 ein Betriebssystem (RTOS für "real-time operating system") gespeichert und wird im Betrieb von dem Flugcontroller 106 ausgeführt. Der Flugcontroller 106 erhält eine Vielzahl von Informationen, von Daten oder von Signalen, die vom Flugcontroller 106 verarbeitet oder weiterverarbeitet werden. Für die Bereitstellung der Informationen weist die Drohne 100 diverse Sensoren oder Sensoranordnungen auf. Bei den Sensoren oder Sensoranordnungen handelt es sich beispielsweise um eine inertiale Messeinheit (IMU für "inertial measurement unit"), und/oder um einen Kompass, und/oder um einen GPS-Sensor 108 (GPS für "global positioning system"), und/oder um eine Einrichtung zur visuellen Positionierung (VPS für "visual positioning system") umfassend eine oder mehrere Kameras, und/oder um Sensoren zur Hinderniserkennung, etc.. Der Flugcontroller 106 prüft auch den Status der elektronischen Drehzahlregler 104, einer Batterie 110 und diverser anderer Module. Die Drohne 100 umfasst typischerweise zusätzlich eine hochauflösende Kamera 116, die zur Bildstabilisierung mit einem Gimbal 118 verbunden ist. Das Gimbal 118 ist eine motorisierte kardanische Aufhängung, die die Bewegungen der Kamera 116 ruckelärmer und flüssiger macht. Neben der hochauflösenden Kamera 116 kann auch eine weitere Kamera oder können auch mehrere weitere Kameras zur Vermeidung von Kollisionen bei der Drohne 100 Einsatz finden. Die von der Kamera 116 oder auch von den Kameras zur Vermeidung von Kollisionen erfassten Daten werden im bestimmungsgemäßen Gebrauch der Drohne 100 an einen Prozessor in Form eines ersten System-on-a-Chip (SoC) für Bilddaten (Bilddaten-SoC 120) geleitet und von diesem verarbeitet. Auf dem Bilddaten-SoC 120 wird im bestimmungsgemäßen Gebrauch der Drohne 100 mindestens ein Betriebssystem (RTOS) ausgeführt und ist derart eingerichtet, ein Videoencoding der Bilddaten der Kamera(s) 116 vorzunehmen. Unter Videoencoding wird der Prozess verstanden, bei dem digitale Videodateien in ein bestimmtes Format umgewandelt werden, um sie für verschiedene Plattformen, Programme und Geräte zu optimieren. Außerdem ist das Bilddaten-SoC 120 häufig derart eingerichtet, um die codierten Bilddaten über eine Schnittstelle, beispielsweise via USB (USB für "Universal Serial Bus"), an einen nicht-flüchtigen drohneninternen Speicher oder auch an eine Speicherkarte, beispielsweise an eine SD-Speicherkarte 128 (SD-Karte für "secure digital memory card") zu übertragen.

Die codierten Bilddaten werden vom Bilddaten-SoC 120 üblicherweise auch an auch einen Radio-Transceiver 112 übergeben, welcher sowohl als Empfänger als auch Sender agiert und damit eine bidirektionale Kommunikation der Drohne 100 mit einer Bodenkontrollstation (GCS für "ground control station") oder mit ihrer Fernsteuerung 114 erlaubt, worauf weiter unten noch näher eingegangen wird. Auch die (Flug-)Steuersignale werden dem Flugcontroller 106 über den Radio-Transceiver 112 bereitgestellt. Aber auch Telemetrie-Daten oder andere Informationen werden vom Flugcontroller dem Radio-Transceiver 112 bereitgestellt. Mithilfe des Radio-Transceivers 112 kann die Drohne 100 auch mit weiteren Drohnen 100 kommunizieren. Der Radio-Transceiver 112 ist typischerweise als ein System-on-a-Chip (SoC) gebildet, in welchem insbesondere zumindest ein Prozessor, ein RAM-Speicher (RAM für "random access memory") sowie ein Input-/Output-Controller integriert sind. Auf dem Radio-Transceiver 112 kann im bestimmungsgemäßen Gebrauch der Drohne 100 mindestens ein eigenständiges Betriebssystem (RTOS) oder auch mehrere solcher Betriebssysteme (RTOS) ausgeführt werden. Um die Kommunikation der Drohne 100 mit ihrer Bodenkontrollstation oder auch mit einem Mobilfunknetz zu ermöglichen, ist eine dem Radio-Transceiver 112 zugeordnete Antenne 122 vorhanden. Der Radio-Transceiver 112 dient der Modulation und der Demodulation der Daten/Signale, damit sie fehlerfrei übertragen werden.

Die Kommunikation zwischen der Drohne 100 und ihrer Fernsteuerung 114 erfolgt über drahtlose Protokolle wie WiFi (WiFi für "wireless fidelity", mithin in einem WLAN für "wireless local area network"; Standard gemäß IEEE 802.11, IEEE 802.11a, IEEE 802.11b, IEEE 802.11h, IEEE 802.11g, IEEE 802.11n, IEEE 802.11ac oder IEEE 802.11ad), Bluetooth (Standard gemäß IEEE 802.15.1) oder über speziellen proprietären Protokolle der Drohnenhersteller. Ein proprietäres Protokoll ist ein Kommunikationsstandard, der von einer einzigen Organisation oder Einzelperson besessen und kontrolliert wird. Im Gegensatz zu offenen Protokollen, die der Öffentlichkeit zugänglich sind und von jedermann frei implementiert werden können, sind proprietäre Protokolle einer bestimmten Firma oder Organisation vorbehalten. Es gibt für Drohnen 100 das, nicht-proprietäre, UAV Control Protocol (UAVCP), welches weit verbreitet ist und der Standardisierung der Kommunikation zwischen Drohnen 100 und ihren Fernsteuerungen 114 dient. Ferner findet das nicht-proprietäre Open Drone Control Protocol (OCDP) Verwendung, welches speziell für Drohnen entwickelt wurde. Es ermöglicht die Interoperabilität zwischen verschiedenen Drohnenmodellen und Fernbedienungen. Entwickler können auf dieser Grundlage benutzerdefinierte Steuerungsschnittstellen und Anwendungen erstellen. Neben UAVCP und OCDP verwenden verschiedene Drohnenhersteller ergänzend oder alternativ ihre eigenen proprietären Protokolle. Für Drohnen 100 existiert eine Mehrzahl von proprietären Kommunikationsprotokollen, darunter insbesondere Lightbridge oder OcuSync der Da-Jiang Innovations (DJI). Die Herstellerin DJI nimmt den wohl größten Marktanteil für kommerzielle Drohnen 100 ein. Weitere Beispiele für proprietäre Protokolle sind FrSky D8, FrSky D16, FlySky AFHDS, TBS Crossfire, Spektrum DSMX.

Für die externe Kommunikation umfasst die Drohne 100 alternativ, vorliegend sogar zusätzlich, einen WiFi- und/oder Bluetooth-Chip 124. Es kann also Bluetooth Einsatz finden und/oder WLAN. Dabei kann der WiFi- und/oder Bluetooth-Chip 124 dieselben Funktionen erfüllen, wie sie im Zusammenhang mit dem Radio-Transceiver 112 erläutert wurden.

Die Fernsteuerung 114 besitzt für die Kommunikation mit der Drohne 100 einen Fernsteuerungs-Transceiver 126, der hinsichtlich seines Aufbaus typischerweise dem Aufbau des Radio-Transceivers 112 der Drohne 100 entspricht. Dem Fernsteuerungs-Transceiver 126 ist für die Signalübertragung ebenfalls eine Fernsteuerungs-Antenne 130 zugordnet. Über die Fernsteuerung 114 kann der Pilot die Flug-/Steuerbefehle eingeben und diverse andere Einstellungen vornehmen und/oder Vorgaben für die Drohne 100 machen, worauf aber an dieser Stelle nicht weiter eingegangen werden soll.

Die Kommunikation der kommerziellen Drohnen erfolgt typischerweise über eine zwischen der Antenne 122 der Drohne 100 und der Fernsteuerungsantenne 130 der Fernsteuerung 114 bestehende Kommunikationsverbindung 132 in den unregulierten 2,4-Gigahertz- (GHz) und 5-GHz-Frequenzbereichen der ISM-Bänder (ISM für "industrial, scientific and medical band"). Typischerweise findet sich in diesen ISM-Bändern eine Vielzahl von Signalen von den unterschiedlichsten Geräten, so dass es für das bloße menschliche Auge sehr schwierig ist, auf den ersten Blick zu erkennen, dass es sich bei einem betreffenden Signal um dasjenige einer Drohne 100 handelt.

Durch Abtasten der vorstehend genannten Frequenzbereichen mit einer hohen Abtastrate, insbesondere einer Abtastrate von 15,36 Mega Hertz (MHz) lassen sich beim Einschalten der Drohne 100 und auch beim Betrieb der Drohne 100 verschiedene Signale in den entsprechenden ISM-Bändern erfassen und über den Verlauf der Zeit aufzeichnen; mithin also in einem nicht-flüchtigen Speicher hinterlegen. Für die Erfassung der Signale findet ein Erkennungsgerät Verwendung, insbesondere ein SDR-Gerät (SDR für "software defined radio"). SDR ist eine Methode in der digitalen Signalverarbeitung, die es ermöglicht, verschiedene Aufgaben der Signalerfassung und -bearbeitung im Hochfrequenzbereich zu übernehmen. Bei der SDR wird die Analoghardware auf einen kleinen Frequenzbereich abgestimmt, aber der Großteil der Signalverarbeitung erfolgt softwarebasiert. Ein typisches SDR-Gerät besteht aus einem konfigurierbaren Hochfrequenzfrontend und einem FPGA oder einem programmierbaren System-on-a-Chip (SoC). Die SDR-Hardware kann Signale mit verschiedenen Frequenzen empfangen oder - falls nötig - auch übertragen. Die digitale Signalverarbeitung erfolgt dann im FPGA oder im System-on-a-Chip, wodurch die Funktionalität anpassbar ist. Um die Frequenzen "aus der Luft" zu empfangen wird Analoghardware eingesetzt, wozu entweder ein Geradeausempfänger oder ein Überlagerungsempfänger (sogenannter "Superhet") genutzt wird. Geradeausempfänger empfangen das Signal direkt und wandeln es in ein Basisbandsignal um. Überlagerungsempfänger verwenden eine Mischung aus Frequenzen, um das Signal auf eine Zwischenfrequenz zu verschieben, bevor es weiterverarbeitet wird. Für die zuverlässige Erfassung der Frequenzen wird die Analoghardware ergänzt um omnidirektionale 2,4-GHz-Antennen und/oder um omnidirektionale 5-GHz-Antennen; diese werden nachfolgend - bildlich gesprochen - als "Erfassungs-Antenne(n)" bezeichnet. Für ein verbessertes "Sichtfeld" wird vorzugsweise mindestens ein aus vier Erfassungs-Antennen bestehendes Vier-Antennen-System genutzt (4x4 MIMO).

Die beim Abtasten erfassten Signale unterscheiden sich hinsichtlich ihrer Bandbreite, hinsichtlich ihrer Signaldauer und hinsichtlich des Frequenzbandes. Die Signaldauer kann dabei im Nano- oder Mikrosekundenbereich liegen, weshalb die Detektion und Identifizierung als Drohnensignal für das menschliche Auge alleine nahezu unmöglich ist, weshalb zur Identifizierung ein KI-Modell 400 Einsatz findet, auf welches weiter unten noch näher eingegangen wird. Die erfassbaren Signale sind dabei ausgewählt aus der Gruppe umfassend Signale ausgehend von der Drohne 100 zur Fernsteuerung 114 (sogenannter "Downlink"), Signale von der Fernsteuerung 114 zur Drohne 100 (sogenannter "Uplink") und durch das Signal der sogenannten "DroneID" (ebenfalls Downlink). Letzteres ist ein gesondertes Signal und nutzt eine andere Frequenz als die üblichen Downlink-Signale. Beim Einschalten der Drohne lässt sich außerdem eine Init-Sequenz (Initialisierungssequenz) erfassen. Es lassen sich einzelne, einige oder alle der vorstehend genannten Signale vom SDR-Gerät erfassen und aufzeichnen.

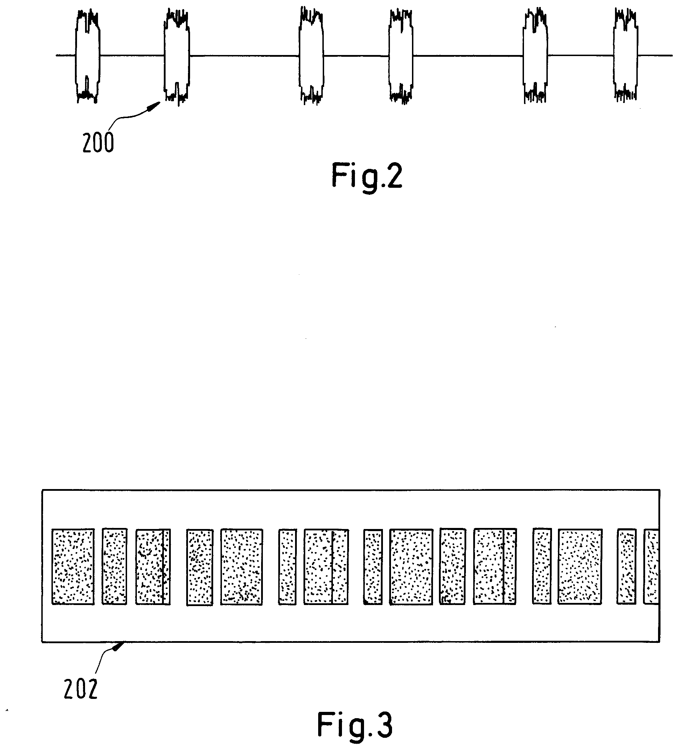

In der Figur 2 ist ein beispielhaftes, von den Erfassungs-Antennen eines SDR-Geräts erfasstes, Funksignal 200 (Downlink-Signale) der Drohne 100 über die Zeit aufgetragen.

In Figur 3 ist ein zweidimensionales Frequenzspektrum 202 (Fouriertransformation (DFT/FFT)) des erfassten Funksignals 200 aus Figur 2 über die Zeit gezeigt. Die Ordinate skizziert also den Frequenzbereich und die Abszisse die Zeit. Untersucht man dieses zweidimensionale Frequenzspektrum 202 genauer, so ist festzustellen, dass bestimmte Bandbreiten, bestimmte Signaldauern und bestimmte Frequenzbänder bei der Verwendung von Drohnen 100 wiederkehrend auftreten.

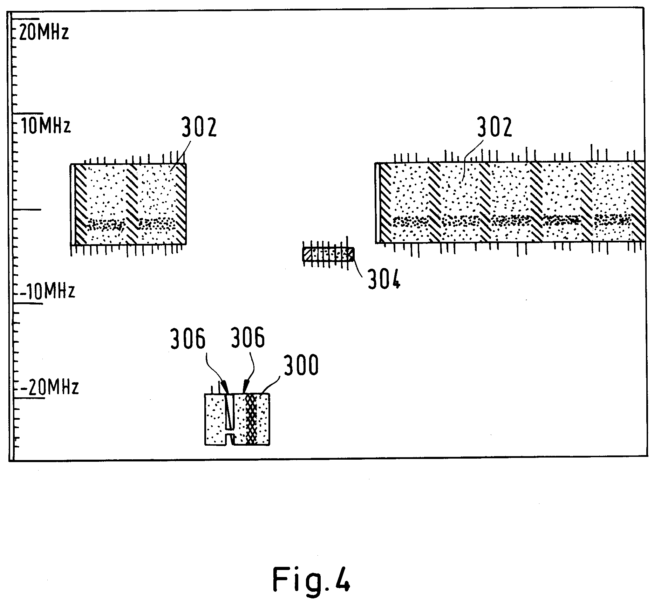

In Figur 4 werden verschiedene Signale illustriert, wie sie in den Frequenzbändern von 2,4 GHz und/oder 5 GHz zu finden sind; die Nulllinie ist hier exemplarisch eingezeichnet und soll nur die gegenseitige relative Lage der einzelnen Signale in den Frequenzbändern illustrieren. Es ist darunter das bereits erläuterte DroneID-Signal 300 zu erkennen, das eine Bandbreite von ungefähr 10 Mega-Hertz (MHz) besitzt. Ein Paket eines solchen DroneID-Signals 300 hat eine vorgegebene Signallänge und setzt sich typischerweise aus neun Symbolen zusammen, worunter sich zwei Zadoff-Chu-Sequenzen 306 finden lassen, die einen vorgegebenen oder vordefinierten, insbesondere zeitlichen, Abstand voneinander einhalten. Beim Abtasten nach diesem DroneID-Signal 300 stellt man beispielsweise für manche DJI-Modelle fest, dass die Drohne 100 es alle 640 Millisekunden (ms) entsendet ("broadcasted"), wobei die entsprechenden Symbole des Signals im Wesentlichen beibehalten bleiben und es dadurch identifizierbar wird.

Ferner ist exemplarisch ein Videosignal 302 der Drohne 100 gezeigt, welches an die Bodenstation bzw. an die Fernsteuerung 114 übermittelt, und welches einstellungsabhängig eine Bandbreite von ungefähr 10 MHz oder ungefähr 20 MHz einnimmt. Zusätzlich ist exemplarisch ein Fernsteuerungssignal 304 gezeigt, welches eine charakteristische Bandbreite von ungefähr 2 MHz besitzt.

Alle diese Signale 300, 302, 304 lassen sich in einer ersten Variante als ein bildbasiertes Muster in einem nicht-flüchtigen Speicher, insbesondere in einer Datenbank als Referenzmuster hinterlegen. Alle diese Signale 300, 302, 304 lassen sich in einer zweiten Variante nicht-bildbasiert im Zeitbereich bewerten und in einem nicht-flüchtigen Speicher, insbesondere in einer Datenbank als Referenzmuster hinterlegen; es kann in diesem zweiten Fall also auf die Überführung in ein bildbasiertes System verzichtet werden. Die erste und die zweite Variante können separat oder auch kombiniert genutzt werden. In beiden Fällen steht in der Datenbank also ein Referenzmerkmalssatz vor, der drohnenspezifisch ist.

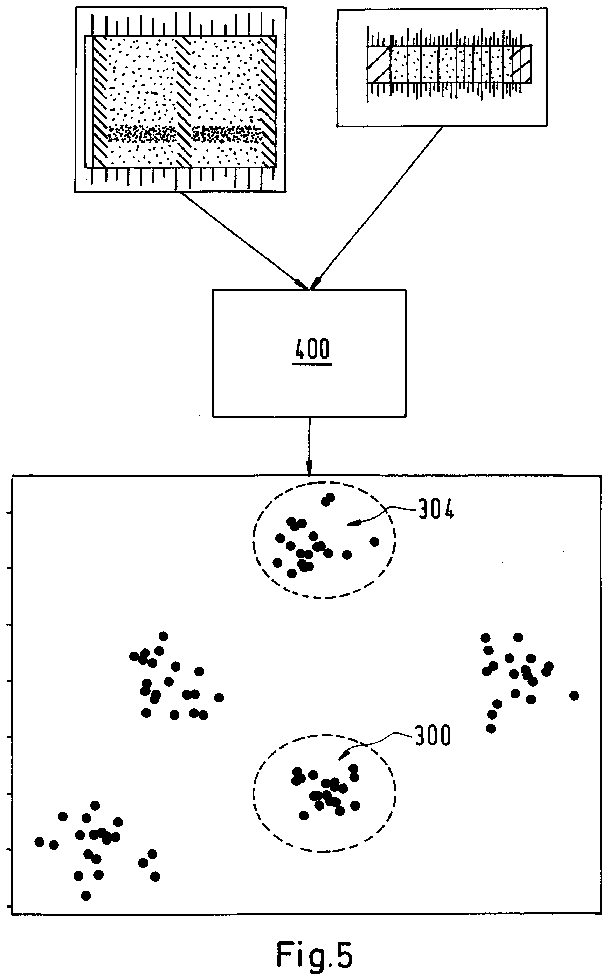

Es gibt also einen drohnenspezifischen Referenzmerkmalssatz mit bildbasierten und/oder mit digitalen Referenzmerkmalen, zum Beispiel abgeleiteten Datenwerten, die aus einem KI-Modell 400, beispielsweise einem trainierten Künstlichen Neuronalen Netz (ANN für "artificial neural network") stammen, welche mit live aufgenommenen Werten verglichen werden können, die ebenfalls das gleiche KI-Modell 400 bzw. Neuronale Netz durchlaufen haben. Eine entsprechende KI kann somit also durch ein Künstliches Neuronales Netz bereitgestellt sein, beispielsweise mit sogenanntem "Deep Learning". Es kann der Referenzmerkmalssatz bildbasiert und/oder nicht-bildbasiert mittels "Machine-Learning" (maschinellem Lernen), Künstlicher Intelligenz, SVM (SVM für "support vector machine") oder mithilfe von Korrelation-Algorithmen erfasst und anschließend beim Vergleich mit live erfassten Werten ausgewertet werden. Die Klassifizierung mithilfe des KI-Modells 400 in Form einer SVM ist durch Figur 5 illustriert.

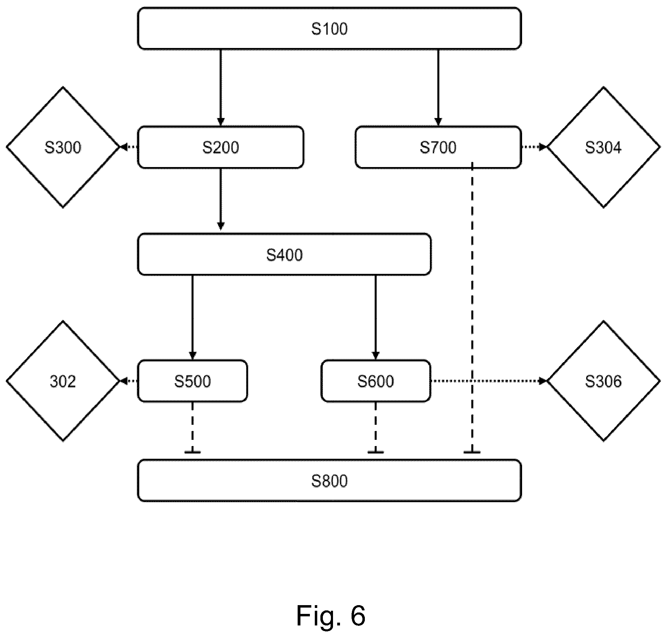

Nachfolgend wird anhand von Figur 6 erläutert, wie erkannt wird, ob unter den vom SDR-Gerät erfassten oder erfassbaren Daten solche vorhanden sind, die drohnenspezifisch sind, damit auf das Vorliegen einer Drohne 100 in Reichweite des SDR-Geräts geschlossen werden kann.

Im ersten Schritt S100 werden die Drohne 100 und ihre Fernsteuerung 114 eingeschaltet. Anschließend wird im Schritt S200 die Init-Sequenz der Drohne 100 ausgetauscht; typischerweise erfolgt der Austausch einmalig nach dem Einschalten. Dieser Austausch der Init-Sequenz kann von SDR-Geräten erfasst werden, wobei die Init-Sequenz dann mithilfe des erfindungsgemäß eingesetzten KI-Modells 400 im Schritt S300 analysiert und auch erkannt wird; und zwar auch dann, wenn eine Vielzahl anderer - nicht drohnenspezifischer - Signale vom SDR-Gerät erfasst wurden. Im Schritt S400 wird eine Kommunikationsverbindung zwischen der Drohne 100 und ihrer Fernsteuerung 114 aufgebaut. Anschließend tauscht die Drohne 100 im Schritt S500 mit ihrer Fernsteuerung 114 wiederkehrend, insbesondere quasikontinuierlich, Fernsteuerungssignale 304 aus, die ebenfalls mithilfe des erfindungsgemäß eingesetzten KI-Modells 400 im Schritt S302 analysiert und auch erkannt werden; und zwar auch dann, wenn eine Vielzahl anderer - nicht drohnenspezifischer - Signale vom SDR-Gerät erfasst wurden. An dem Schritt S600 tauscht die Drohne mit ihrer Fernsteuerung 114 wiederkehrend, insbesondere quasikontinuierlich, das Videosignal 302 aus, das ebenfalls mithilfe des erfindungsgemäß eingesetzten KI-Modells 400 im Schritt S306 analysiert und auch erkannt wird; und zwar auch dann, wenn eine Vielzahl anderer - nicht drohnenspezifischer - Signale vom SDR-Gerät erfasst wurden. Im Schritt S700 entsendet die Drohne 100 wiederkehrend, insbesondere quasikontinuierlich, das vorangehend exemplarisch näher erläuterte DroneID-Signal 300, welches ebenfalls mithilfe des erfindungsgemäß eingesetzten KI-Modells 400 im Schritt S304 analysiert und auch erkannt wird; und zwar auch dann, wenn eine Vielzahl anderer - nicht drohnenspezifischer - Signale vom SDR-Gerät erfasst wurden. Im später folgenden Schritt S800 werden die Drohne 100 und ihre Fernsteuerung 114 wieder ausgeschaltet.

Der besondere und sehr wertvolle Vorteil bei der vorliegenden Art der Erkennung der Drohnen-Signale mithilfe des KI-Modells 400 besteht darin, dass keine Decodierung der Signale selbst erforderlich ist, um auf das Vorhandensein einer Drohne 100 in Reichweite des SDR-Geräts schließen zu können.

Doch die zur Verfügung stehenden Daten oder die erfassten Signale lassen nicht nur Rückschlüsse auf das bloße Vorhandensein einer Drohne 100 in der Reichweite des SDR-Geräts zu, sondern es kann mithilfe einer Triangulation der Funksignale 200 aus Figur 2 auf die Position der Drohne 100 im dreidimensionalen Raum geschlossen werden. Hierzu wird eine AoA-Technik auf das Funksignal 200 angewendet (AoA für "angle of arrival"), wobei die Laufzeitunterschiede oder die Signal-Amplituden-Unterschiede beim Empfang des Signals zwischen den mehreren Empfangs-Antennen ausgenutzt wird. Es werden beim SDR-Gerät mindestens drei Empfangs-Antennen genutzt, um den Winkel zu bestimmen, unter welchem das Signal auf den "Empfänger" trifft. Wenn bestimmt werden konnte unter welchem Winkel das Signal auftrifft kann auch dessen Signalstärke näher untersucht werden, was die Ortungsgenauigkeit im Raum zusätzlich erhöht. Da typischerweise eine Vielzahl von Signalen vom SDR-Gerät empfangen werden, wird die vorstehende Ortungsfunktion ergänzt um die bildbasierte oder nicht-bildbasierte Mustererkennung mithilfe des KI-Modells 400, um eine oder um mehrere Drohnen 100 zielgenau zu orten.

Das zweidimensionale Frequenzspektrum 202 aus Figur 3 lässt sich außerdem nochmals weitergehender untersuchen, um die Distanz zwischen der Fernsteuerung 114 und ihrer Drohne 100 zu ermitteln. Es hat sich nämlich durch empirische Beobachtung herausgestellt, dass eine Drohne 100 automatisch zwischen den 2,4-GHz- und 5,7-GHz-Bändern umschaltet. Außerdem erfolgt durch die Drohne 100 eine Quadraturamplitudenmodulation (QAM) für die Signalübertragung. Die QAM kombiniert eine Amplitudenmodulation mit einer Phasenmodulation. In einer Konstellationskarte lassen sich die möglichen Zustände eines QAM-Signals erfassen. Die Konstellationskarte hilft dabei, die Signalqualität zu analysieren und zu optimieren. Sie ermöglicht es, die Störungen und Interferenzen im Signal zu erkennen und zu korrigieren. Die Karte zeigt, wie diese Zustände im komplexen Koordinatensystem verteilt sind. Je nach QAM-Ordnung gibt es unterschiedlich viele Zustände auf der Karte. Beispielsweise gibt es eine QAM64-Modulation. Das bedeutet, es gibt 64 mögliche Zustände auf der Konstellationskarte. Jeder Zustand repräsentiert eine Kombination aus Amplitude und Phase. Je höher die Ordnung (z. B. QAM64 oder QAM256), desto mehr Punkte gibt es auf der Karte. Es hat sich herausgestellt, dass die Drohne 100 die verfügbaren Protokolle "umschaltet", wenn sich besonders viele Störsignale in ihrem Bereich befinden. Auch erfolgt ein "Umschalten" des verfügbaren Zustände, mithin der QAM-Ordnung bei der QAM, in Abhängigkeit der Entfernung der Drohne 100 von ihrer Fernsteuerung 114. Wenn sich die Drohne 100 von ihrer Fernsteuerung 114 entfernt, so wird automatisiert die "Kommunikationskomplexität" reduziert, beispielsweise von QAM64 zu QAM32 oder QAM16. Die Auswertung der genutzten Protokolle lässt dann einen Rückschluss auf die Distanz zwischen der Drohne 100 und ihrer Fernsteuerung 114 zu; insbesondere sogar in Abhängigkeit der ebenfalls erfassten Störsignale, die nicht drohnenspezifisch sind. Das erfindungsgemäße KI-Modell 400 kann dann vorzugsweise zusätzlich darauf trainiert sein, die QAM-Ordnung zu klassifizieren, um einen Rückschluss auf die Distanz zwischen der Drohne 100 und ihrer Fernsteuerung 114 zu ziehen.

Mit der vorliegenden Erfindung erfolgt im Ergebnis eine zuverlässige und reproduzierbare Erkennung von Drohnen 100 auch ohne ihre einzelnen Signale entschlüsseln zu müssen.

### Bezugszeichenliste

- 100: Drohne
- 102: Rotor
- 104: Drehzahlregler (ECU)
- 106: Flugcontroller (FC)
- 108: GPS-Sensor
- 110: Batterie ("smart battery")
- 112: Radio-Transceiver
- 114: Fernsteuerung
- 116: Kamera
- 118: Gimbal
- 120: Bilddaten-SoC
- 122: Antenne (Drohne)
- 124: WiFi- und/oder Bluetooth-Chip
- 126: Fernsteuerungs-Transceiver
- 128: SD-Speicherkarte
- 130: Fernsteuerungs-Antenne
- 132: Kommunikationsverbindung

- 200: Funksignal
- 202: Frequenzspektrum

- 300: DroneID-Signal (Drohnensignal)
- 302: Videosignal (Drohnensignal)
- 304: Fernsteuerungssignal (Drohnensignal)
- 306: Zadoff-Chu-Sequenz (Teil von Drohnensignal)

- 400: KI-Modell (z.B. SVM)

- S100: Einschalten der Drohne
- S200: Versenden der Init-Sequenz
- S300: Mustererkennung mit KI
- S302: Mustererkennung mit KI
- S304: Mustererkennung mit KI
- S306: Mustererkennung mit KI
- S400: Verbindungsherstellung Drohne-Fernsteuerung
- S500: Senden/Empfangen von Steuersignalen
- S600: Senden/Empfang von Videostream
- S700: Senden/Empfang von DroneID
- S800: Ausschalten der Drohne

## Patentansprüche

1. Verfahren zur Detektion einer Drohne (100) auf KI-Basis, umfassend die Schritte:
- Erfassen einer Vielzahl von drahtlos übermittelten Funksignalen (200) über die Luft mithilfe mindestens einer Erfassungs-Antenne eines Erfassungsgeräts;
- Analysieren der Funksignale (200) mithilfe eines auf Drohnensignale (300, 302, 304) hinsichtlich der zeitlichen Abfolge und/oder hinsichtlich der zeitlichen Länge von Signalen trainierten KI-Modells (400); und
- Feststellen des Vorhandenseins mindestens einer Drohne (100) innerhalb der Reichweite des Erfassungsgeräts, wenn das trainierte KI-Modell (400) eine Übereinstimmung detektiert oder wenn das trainierte KI-Modell (400) zumindest eine Übereinstimmung bis zu einem vorgegebenen Schwellenwert detektiert.

2. Verfahren nach Anspruch 1, **dadurch gekennzeichnet, dass** das KI-Modell (400) eingerichtet ist, ein Drohnensignal in Form eines DroneID-Signals (300) durch einen Vergleich mit mindestens einem schon vorab im Zeitbereich erfassten Referenzmuster für dieses Signal zu erkennen und/oder zu klassifizieren, um daraus auf das Vorhandensein mindestens einer Drohne (100) innerhalb der Reichweite des Erfassungsgeräts zu schließen.

3. Verfahren nach Anspruch 1 oder 2, **dadurch gekennzeichnet, dass** das KI-Modell (400) eingerichtet ist, ein Drohnensignal in Form eines Videosignals (302) durch einen Vergleich mit mindestens einem schon vorab im Zeitbereich erfassten Referenzmuster für dieses Signal zu erkennen und/oder zu klassifizieren, um daraus auf das Vorhandensein mindestens einer Drohne (100) innerhalb der Reichweite des Erfassungsgeräts zu schließen.

4. Verfahren nach einem der Ansprüche 1 bis 3, **dadurch gekennzeichnet, dass** das KI-Modell (400) eingerichtet ist, ein Drohnensignal in Form eines Fernsteuerungssignals (306) durch einen Vergleich mit mindestens einem schon vorab im Zeitbereich erfassten Referenzmuster für dieses Signal zu erkennen und/oder zu klassifizieren, um daraus auf das Vorhandensein mindestens einer Drohne (100) innerhalb der Reichweite des Erfassungsgeräts zu schließen.

5. Verfahren nach einem der Ansprüche 1 bis 4, **dadurch gekennzeichnet, dass** das KI-Modell (400) einen Filter nutzt, um die Funksignale (200) als Muster im Zeitbereich mit Referenzmustern zu vergleichen.

6. Verfahren nach einem der Ansprüche 1 bis 5, **dadurch gekennzeichnet, dass** das KI-Modell (400) auf einer Support-Vector-Machine (SVM) basiert, die eingerichtet ist, eine Klassifizierung der Signale im Zeitbereich zumindest hinsichtlich der Bandbreite und/oder hinsichtlich der Signaldauer und/oder hinsichtlich des Frequenzbandes vorzunehmen.

7. Verfahren nach einem der Ansprüche 1 bis 6, **dadurch gekennzeichnet, dass** das Feststellen des Vorhandenseins mindestens einer Drohne (100) innerhalb der Reichweite des Erfassungsgeräts mit dem trainierten KI-Modell (400) dekodierungsfrei erfolgt.

8. Verfahren zum Trainieren eines KI-Modells (400) für die Drohnenerkennung nach einem der Ansprüche 1 bis 7, umfassend die Schritte:
- Erfassen von über die Luft drahtlos übermittelten Funksignale (200) von einer Drohne (100) oder zwischen der Drohne (100) und einer ihr zugehörigen Fernsteuerung (114) über die Luft mithilfe mindestens einer Erfassungs-Antenne eines Erfassungsgeräts;
- Definieren der Drohnensignale als Referenzmuster in einem drohnenspezifischen Referenzmerkmalssatz hinsichtlich ihrer zeitlichen Abfolge oder hinsichtlich ihrer zeitlichen Länge;
- Speichern des drohnenspezifischen Referenzmerkmalssatzes in eine Datenbank; und
- Erfassen weiterer Funksignale und Trainieren des KI-Modells (400) unter Verwendung der weiteren Daten.

9. Computerprogramm mit Programmcode zur Durchführung aller Verfahrensschritte nach einem der Ansprüche 1 bis 7, wenn das Computerprogramm in einem Computer ausgeführt wird.

10. Erfassungsgerät mit einem Computer, welcher dazu eingerichtet ist, ein Verfahren nach einem der Ansprüche 1 bis 7 zu bewirken.
